(19)

Europäisches Patentamt

European Patent Office

Office européen des brevets

(11) **EP 4 571 868 A1**

(12) **EUROPEAN PATENT APPLICATION**

(43) Date of publication:
**18.06.2025 Bulletin 2025/25**

(21) Application number: **24212941.9**

(22) Date of filing: **14.11.2024**

(51) International Patent Classification (IPC):
*H01M 4/04* (2006.01)     *H01M 4/62* (2006.01)
*H01M 10/0525* (2010.01)     *H01M 4/36* (2006.01)
*H01M 4/1393* (2010.01)     *H01M 4/133* (2010.01)
*H01M 4/139* (2010.01)     *H01M 4/02* (2006.01)

(52) Cooperative Patent Classification (CPC):
**H01M 4/1393; H01M 4/0404; H01M 4/133;**
**H01M 4/366;** H01M 4/139; H01M 4/622;
H01M 10/0525; H01M 2004/021

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **12.12.2023 JP 2023209442**

(71) Applicant: **Prime Planet Energy & Solutions, Inc.**
**Chuo-ku, Tokyo 103-0022 (JP)**

(72) Inventors:
• **LI, Ximeng**
**Tokyo, 103-0022 (JP)**
• **SHINDO, Yohei**
**Tokyo, 103-0022 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **ELECTRICITY STORAGE DEVICE, AND MANUFACTURING METHOD THEREOF**

(57)     A negative electrode composite material layer (42) is configured with a laminate structure that consists of n layers (the n is a natural number being equal to or more than 2) from a first layer (42a) positioned closer to a negative electrode current collector foil (41) to a $n^{th}$ layer (42n) positioned closer to a separator (50), here a binder content rate (A) of the $n^{th}$ layer (42n) is equal to or more than 5.0 wt% and not more than 35.0 wt% when a solid content weight of a whole of the $n^{th}$ layer (42n) is treated as 100 wt%, a binder content rate (B) of the first layer (42a) satisfies $1.10 \leq A/B \leq 62.50$ when a solid content weight of a whole of the first layer (42a) is treated as 100 wt%. An average resistance value of the negative electrode composite material layer (42) is equal to or more than 15 $\Omega/cm^2$ and not more than 50 $\Omega/cm^2$.

FIG.3

**Description**

BACKGROUND

Technical Field

The present disclosure relates to an electricity storage device, and manufacturing method thereof.

[Background Art]

An electricity storage device, such as lithium ion secondary battery, nickel hydrogen battery, the other secondary batteries, and alternatively capacitor, is suitably used, because of lightweight and its high energy density, as a power supply for a portable equipment, such as personal computer and portable terminal, or as a high output power supply of a vehicle, such as power supply for driving automobiles of battery electric vehicle (BEV). An electrode included by the electricity storage device as described above includes a current collector foil and a composite material layer that is formed on a surface of this current collector foil. The composite material layer is mainly configured with an active material. In addition, typically, the composite material layer contains a conductive assistant agent or a binding agent (a binder). The binder is contributed in binding the active material and the current collector foil, in binding the active materials to each other, or the like, so as to contribute in maintaining the electrode structure.

Regarding the electricity storage device, according to an expansion of applications and a development, it is required to be able to implement an electric charge (or an electric discharge) in a short time with a large current. For the needs described above, a technique is known that can enhance a capacity maintenance rate of the electricity storage device by reducing an electrical resistance of the electrode. For example, Japanese Patent Application Publication No. 2018-174096 discloses an electrode including an active material layer in which a content amount of a conductive assistant agent and a binder at a surface side is higher than a content amount of the conductive assistant agent and the binder at a current collector base material side. In this electricity storage element, by making a contact resistance of a metal foil and a positive electrode active material be smaller, a reduction of an output and input performance after the repeat of an electric charge and discharge is suppressed. Japanese Patent Application Publication No. 2022-100812 discloses an electrode including an active material layer in which, when the active material layer is divided into 6 equal parts, a binder content amount at the most current collector body side is lower than a binder content amount at the most surface side. This cited document discloses a technique that can reduce an electrical resistance and maintain a cycle characteristic by further containing a carbon nanotube as the conductive assistant agent in a positive electrode active material layer.

SUMMARY

Anyway, in the electricity storage device, there is a situation where a metal (for example, a metal lithium, or the like) becoming a charge carrier happens to precipitate on a surface of a negative electrode composite material layer (in other words, an interface of the negative electrode composite material layer and a separator) at an electrically charging time. In that situation, the charge carrier (for example, a lithium ion, or the like) of the composite material layer is reduced, and thus the capacity maintenance rate after the cycle would be reduced.

The present disclosure is to provide an electricity storage device in which, while the capacity maintenance rate is maintained, the precipitation of the metal becoming the charge carrier is suppressed and thus a higher safety property is implemented.

The herein disclosed electricity storage device includes a positive electrode including a positive electrode current collector foil and a positive electrode composite material layer, includes a negative electrode including a negative electrode current collector foil and a negative electrode composite material layer, and includes a separator being disposed between the positive electrode and the negative electrode. The negative electrode composite material layer includes an active material and a binder, and the negative electrode composite material layer is configured with a laminate structure that consists of n layers (the n is a natural number being equal to or more than 2) from a first layer positioned closer to the current collector foil to a $n^{th}$ layer positioned closer to the separator. Here, a binder content rate (A) of the $n^{th}$ layer is equal to or more than 5.0 wt% and not more than 35.0 wt% when a total weight of a solid content of the $n^{th}$ layer is treated as 100 wt%, and a binder content rate (B) satisfies a formula (1) $1.10 \leq A/B \leq 62.50$ when a total weight of a solid content of the first layer is treated as 100 wt%. In addition, an average resistance value from the first layer positioned closer to the current collector foil to the $n^{th}$ layer positioned closer to the separator is equal to or more than 15 $\Omega/cm^2$ and not more than 50 $\Omega/cm^2$.

If the electricity storage device has a resistance value of the negative electrode being too lower (a conductivity of the charge carrier being too higher), many charge carriers drastically move from the positive electrode to the negative electrode at the electrically charging time. By doing this, on the surface of the composite material layer, the precipitation of the metal becoming the charge carrier is accelerated. On the contrary, as the result obtained by the inventors' intensive study, it was found that, by making the binder content rate (A) of the surface layer of the negative electrode composite material layer be higher (in particular, 5.0 wt% to 35.0 wt%), the precipitation of the metal becoming the charge carrier could be suppressed. In short, according to the electricity storage device described above, the resistance value of the surface layer of the negative electrode composite material layer is suitably increased, and thus the conductivity of the charge carrier (for example, the lithium ion, or the like) at the surface layer side of the negative electrode composite material layer is reduced. By doing this, when the charge carrier moves from the positive electrode to the negative electrode at the electrically charging time, it is possible to uniformly store the charge carrier over the whole of the negative electrode composite material layer. As this result, it is possible to suppress the precipitation of the metal (for example, the metal lithium, or the like) becoming the charge carrier, and thus to enhance the capacity maintenance rate after the cycle. In addition, by making the binder content rates at the top surface layer and the bottom surface layer of the negative electrode composite material layer be different from each other, it is possible to suppress the average resistance value of the negative electrode so as to make it be equal to or less than $50 \, \Omega/cm^2$. In particular, the binder content rate (A) at the surface layer of the negative electrode composite material layer and the binder content rate (B) at the layer closer to the current collector foil are made to satisfy $1.10 \leq A/B \leq 62.50$. By doing this, the electrically conductive property near the current collector foil is enhanced even if a portion near the surface layer has the higher resistance, and thus it is possible, while enhancing the capacity maintenance rate of the electricity storage device, to suppress the reduction in the battery performance.

In one aspect of the electricity storage device disclosed herein, a binder content rate (C) of an arbitrary layer of the negative electrode composite material layer and a binder content rate (D) of a layer positioned adjacent to the arbitrary layer in a thickness direction at a side of the negative electrode current collector foil satisfy a formula (2) $1.10 \leq C/D \leq 16.10$. By doing this, a difference of the conductivities of the charge carriers between the two adjacent layers becomes smaller, and thus it is possible between the layers to suppress the precipitation of the metal becoming the charge carrier.

In one aspect of the electricity storage device disclosed herein, the negative electrode composite material layer is configured with 3 or more layers. By doing this, it is further surely possible to suppress the precipitation of the metal becoming the charge carrier.

In one aspect of the electricity storage device disclosed herein, the binder content rate is gradually increased from the first layer to the $n^{th}$ layer in the thickness direction of the negative electrode composite material layer. By doing this, on the negative electrode composite material layer, a gradation of the resistance values from the vicinity of the negative electrode current collector foil to the vicinity of the separator can be made. Regarding the effect described above, on the negative electrode composite material layer, the resistance value at the position closer to the negative electrode current collector foil becomes smaller. As this result, at the electrically charging time, the charge carriers become easily diffused, and thus it is possible to make them uniformly move over the whole of the negative electrode composite material layer.

One aspect of the manufacturing method of the electrode disclosed herein is a method for manufacturing an electrode that includes an electrode current collector foil and an electrode composite material layer and that includes a laminate structure consisting of n layers (the n is a natural number being equal to or more than 2) from a first layer positioned closer to the electrode current collector foil to a $n^{th}$ layer positioned on a surface in a thickness direction of the electrode composite material layer. It includes step of preparing composite materials for the first layer to the $n^{th}$ layer, and a step of sequentially laminating composite material layers for the first layer to the $n^{th}$ layer onto the electrode current collector foil and of drying. In addition, drying a layer after a second layer is performed to inhibit binders contained in a composite material composition from being moved into a different layer due to a convection of a solvent. In addition, the composite material layers from the first layer to the $n^{th}$ layer have content rates of the binders increasing more as the n becomes larger from 1.

The manufacturing method of the electrode described above performs drying while, on the composite material layer having a laminate structure, preventing a phenomenon (migration) in which the binder contained in the composite material layer is moved into a different layer by a convection of a solvent according to excessive heating or solvent evaporation . By doing this, on the composite material layer, it is possible to make a concentration gradient of the binder from the current collector foil vicinity to the separator vicinity. As this result, it is possible to manufacture the electrode in which the precipitation of the metal (for example, the metal lithium, or the like) becoming the charge carrier is suppressed and the capacity maintenance rate after the cycle is enhanced. In addition, it is possible to manufacture the electrode in which the resistance value at the current collector foil side of the composite material layer is reduced and the electrically conductive property at the current collector foil vicinity is reduced.

BRIEF DESCRIPTION OF THE DRAWINGS

FIG. 1 is a cross section schematic view of a lithium ion secondary battery of a herein disclosed one embodiment.

FIG. 2 is a disassembled perspective view that schematically shows a laminate electrode assembly of the herein disclosed one embodiment.

FIG. 3 is a schematic cross section view that shows a multi-layer laminate structure of a negative electrode composite material layer of the herein disclosed one embodiment.

FIG. 4 is a schematic cross section view that shows a 2-layer laminate structure of the negative electrode composite material layer of the herein disclosed one embodiment.

FIG. 5 is a schematic cross section view that shows a 3-layer laminate structure of the negative electrode composite material layer of the herein disclosed one embodiment.

FIG. 6 is a schematic cross section view that shows a 4-layer laminate structure of the negative electrode composite material layer of the herein disclosed one embodiment.

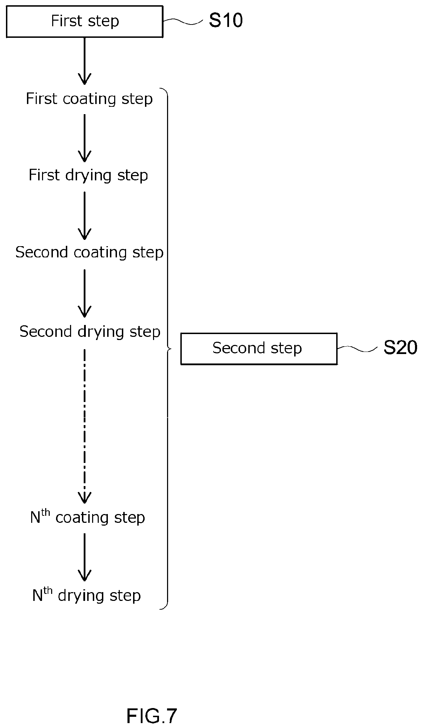

FIG. 7 is a flowchart that is to explain a manufacturing method of the composite material layer having the multi-layer laminate structure of the herein disclosed one embodiment.

## DETAILED DESCRIPTION

<Term definition>

Below, one embodiment of an electricity storage device in the present disclosure will be described in detail, while drawings are referred. The matters other than matters particularly mentioned in this description, and required for practicing (for example, a general configuration, a manufacture process, or the like, of the electricity storage device, which does not characterize the present disclosure) can be grasped as design matters of those skilled in the art based on the related art in the present field. The present disclosure can be implemented on the basis of contents disclosed in the present description and a common general technical knowledge in this technical field. Incidentally, in the drawings described below, the same numerals and signs are given to the members/parts providing the same effect. Further, the dimensional relation (such as length, width, and thickness) in each drawing does not reflect the actual dimensional relation.

In the present description, the wording "electricity storage device" is a concept that semantically covers devices in which, by movement of electric charge carriers between a pair of electrodes (a positive electrode and a negative electrode), an electric charge and electric discharge response is generated. In other words, the electricity storage device is to semantically cover a battery, such as secondary battery (for example, a lithium ion secondary battery, a nickel hydrogen battery, or a nickel cadmium battery), and a capacitor (a physical battery), such as lithium ion capacitor and electric double layer capacitor. Additionally, the wording "lithium ion secondary battery" in the present description represents an electricity storage device which uses a lithium ion as the electric charge carrier and in which the electric charge and the electric discharge are repeatedly implemented by movement of the electric charge between the positive electrode and the negative electrode in accordance with the lithium ion.

In the present description, when a numerical value range is represented by "A to B (here, A and B are arbitrary values)", it means "equal to or more than A and not more than B" and furthermore semantically covers "more than A and less than B", "more than A and not more than B", and "equal to or more than A and less than B".

<Lithium ion secondary battery>

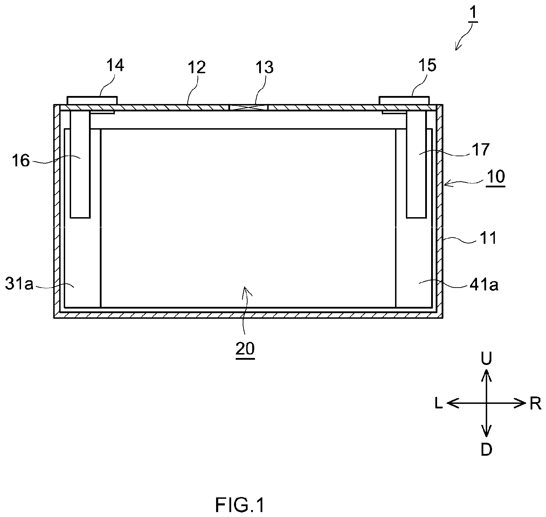

Below, a lithium ion secondary battery being one of embodiments in the present disclosure will be explained. FIG. 1 is a schematic longitudinal cross section view of a lithium ion secondary battery 1 in accordance with one embodiment. Incidentally, regarding an explanation described below, reference signs L, R, U, and D in drawings respectively represent left, right, up, and down of the lithium ion secondary battery 1. However, these are merely directions for convenience sake of explanation, and are not intended to restrict a disposed form of the electricity storage device, at all.

<Battery case>

As shown in FIG. 1, regarding the lithium ion battery 1 in accordance with the present embodiment, a shape of a battery case 10 is a rectangular parallelepiped shape, and a flat square shape. However, the shape of the battery case 10 is not restricted to this, and might be, for example, a cylindrical shape. The battery case 10 includes a battery body 11 that has an opening part, and includes a sealing plate (a lid body) that is configured to seal the opening part. The battery body 11 is configured to accommodate an electrode assembly 20 and an electrolytic solution (not shown in drawings). The battery body 11 and the sealing plate 12 are welded by laser welding, or the like, so as to be sealed. A material quality of the battery case 10 is not particularly restricted, if being the same as one used in this kind of conventional electricity storage device. As an example, it is possible for the material quality of the battery case 10 to use a metal material being lightweight and having a good thermal conductivity, such as aluminum. However, a configuration of the battery case 10 can be changed, too. For example, as the battery case, it is possible to use a laminate film having a flexibility. In the present embodiment, the battery body 11 is configured with a bottom wall, a pair of shorter side walls extending from the bottom wall and being opposed mutually, and longer side walls. In the present embodiment, the sealing plate 12 of the battery case 10 is provided with a thin-walled safe valve 13 that is set to release an internal pressure of the battery case when the internal pressure increases to be more than a predetermined level, and provided with an injection port (not shown in drawings) that is configured to inject the electrolytic solution.

In addition, at an outside of the battery case, a positive electrode outside terminal 14 and a negative electrode outside terminal 15, which are for outside connection, are provided. These electrode terminals are electrically connected via inside terminals 16, 17 to the electrode assembly 20 accommodated in the battery case. The outside terminals 14, 15 are made of metal. As the positive electrode outside terminal 14, for example, it is possible to use an aluminum, an aluminum alloy, or the like. As the negative electrode outside terminal 15, for example, it is possible to use a copper, a copper alloy, or the like.

The inside terminals 16, 17 are made of metal. As the positive electrode inside terminal 16, from a perspective of enhancing a joint strength with a positive electrode composite material layer non-formation portion 31a, for example, it is possible to use the aluminum, the aluminum alloy, or the like. As the negative electrode inside terminal 17, from a perspective of enhancing a joint strength with a negative electrode composite material layer non-formation portion 41a, for example, it is possible to use the copper, the copper alloy, or the like.

<Electrolytic solution>

As the electrolytic solution, it is possible to use a nonaqueous electrolytic solution in which a supporting salt is dissolved into a suitable nonaqueous type solvent. A conventionally known nonaqueous electrolytic solution can be used without particular restriction. As an example of the nonaqueous type solvent, it is possible to use ethylene carbonate (EC), diethyl carbonate (DEC), dimethyl carbonate (DMC), ethyl methyl carbonate (EMC), or the like. In addition, as an example of the supporting salt, it is possible to use a lithium salt (for example, LiBOB, $LiPF_6$, or the like).

<Electrode assembly>

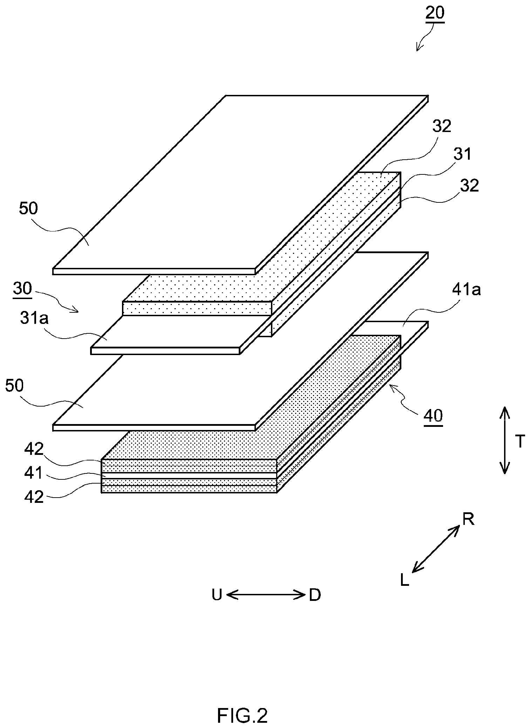

In the present embodiment, the electrode assembly 20 is the laminate electrode assembly in which the rectangular positive electrode 30 and the rectangular negative electrode 40 are alternately stacked via the rectangular separator. FIG. 2 is a disassembled perspective view that schematically shows a cell unit configuring the laminate electrode assembly 20 which is one of the present embodiments. Regarding explanations described below, reference signs LR, T, and UD in drawings are to respectively represent a width direction, a thickness direction, and a depth direction of the laminate electrode assembly 20. However, these are merely directions for convenience sake of explanation, and are not intended to restrict the disposed form of the lithium ion secondary battery 1, at all. Incidentally, the electrode assembly 20 is not restricted to this, and might be a wound electrode assembly in which the positive electrode and the negative electrode are wound via the separator. In addition, a number of the electrode assemblies 20 is not particularly restricted. In the battery case 10, plural electrode assemblies (for example, plural cell units described above are laminated, or the like) might be accommodated.

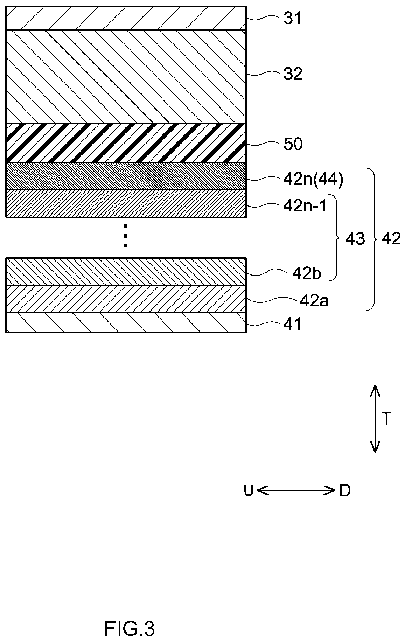

The negative electrode 40 of the lithium ion battery 1 in accordance with the present embodiment includes a composite material layer 42 having a multi-layer structure. FIG. 3 is a schematic cross section view that shows a laminate structure of the electrode assembly 20. The positive electrode 30 includes a positive electrode current collector foil 31 and a positive electrode composite material layer 32. In addition, the negative electrode 40 includes a negative electrode current collector foil 41 and the negative electrode composite material layer 42. Between the positive electrode 30 and the negative electrode 40, a separator 50 is disposed.

<Negative electrode and negative electrode composite material layer>

As shown in FIG. 2, the negative electrode 40 includes the negative electrode current collector foil 41 that is formed in a rectangular shape, and includes the negative electrode composite material layer 42 that is formed on a surface of this negative electrode current collector foil 41. It is enough for the negative electrode composite material layer 42 to be formed on one surface or both surfaces (here, on both surfaces) of the negative electrode current collector foil 41. Additionally, as shown in FIG. 1 and FIG. 2, the negative electrode 40 might include a negative electrode composite material layer non-formation portion 41a which has a part where which the negative electrode composite material layer 42 is not formed and where the negative electrode current collector foil 41 is exposed. Here, the negative electrode composite material layer non-formation portion 41a is provided to protrude from one end of the laminate electrode assembly 20. Onto the negative electrode composite material layer non-formation portion 41a, it is possible to join the negative electrode inside terminal 17.

The negative electrode current collector foil 41 is formed in a rectangular shape. Incidentally, neither the shape nor the size of the negative electrode current collector foil 41 are particularly restricted, and thus these should be suitably decided in accordance with the battery design. As a material of the negative electrode current collector foil 41, it is possible to use a well-known negative electrode current collector foil being used for the electricity storage device, which is not particularly restricted. A material of the negative electrode current collector foil 41 is, for example, a copper or a copper alloy. Regarding a membrane thickness of the negative electrode current collector foil 41, in consideration of a balance of the capacity density of the electricity storage device and a strength of the current collector body, a lower limit value is preferably equal to or more than 3 $\mu$m, further preferably equal to or more than 5 $\mu$m, or furthest preferably equal to or more than 8 $\mu$m. In addition, an upper limit value is preferably equal to or less than 40 $\mu$m, further preferably equal to or less than 25 $\mu$m, or the furthest preferably equal to or less than 15 $\mu$m.

The negative electrode composite material layer 42 contains at least a negative electrode active material and a binder. As the negative electrode active material, it is possible to use a negative electrode active material that is used for the negative electrode of the general lithium ion secondary battery. For example, as the negative electrode active material, it is possible to use a carbon material, such as soft carbon (easily graphitized carbon), amorphous carbon material, graphite, hard carbon (hardly graphitized carbon), and carbon nanotube, a metal oxide material, such as silicon oxide, titanium oxide, vanadium oxide, and lithium titanium composite oxide, a metal nitride material, such as lithium nitride, and lithium cobalt composite nitride, a silicon compound, or the like. Among them, from a perspective of enhancing the energy density, it is preferable that the negative electrode active material 45 is the graphite. Incidentally, among these negative electrode active materials, only one kind might be used, or, two or more kinds might be combined so as to be used. In addition, unless significantly spoiling the effects of the technique according to the present disclosure, it is possible into each layer to add the conductive assistant agent, the inorganic filler, or the like.

The negative electrode active material might be formed in a particle shape. In that case, an average particle diameter of the negative electrode active material is not particularly restricted. The average particle diameter of the negative electrode active material is typically equal to or less than 30 $\mu$m. An electrode density is increased more as the average particle diameter is smaller, and thus, it can contribute in implementing the higher capacity of the electricity storage device. An upper limit value of the average particle diameter of this negative electrode active material is preferably equal to or less than 25 $\mu$m, or further preferably equal to or less than 20 $\mu$m. Incidentally, the average particle diameter of the active material can be obtained by a 50 volume% particle diameter (a D50 particle diameter) based on a laser-diffraction light-scattering method.

As the binder of the negative electrode composite material layer 42, it is possible to use a binder that is used for the negative electrode of the general lithium ion secondary battery or the general lithium ion capacitor. For example, as the binder used for the nonaqueous paste, it is possible to use a halogenated vynyl resin, such as polyvinylidene fluoride (PVDF) and polyvinylidene chloride (PVDC), a polyalkylene oxide, such as polyethylene oxide (PEO), or the like. Additionally, in a case where an aqueous paste is used, it is possible to preferably use an aqueous polymer material or a water dispersible polymer material. For example, as the binder used for the aqueous paste, it is possible to use polytetrafluoroethylene (PTFE), carboxymethyl cellulose (CMC), styrene butadiene rubber (SBR), or the like. On a surface layer 44 of the negative electrode composite material layer 42 of the present disclosure, a comparatively large amount of binder is used, and thus one, whose cost is low and whose load to the environment is low, is preferable. Therefore, as the binder used for the negative electrode composite material layer 42, the CMC or the SBR is preferable. Incidentally, among these binders, only one kind might be used, or, two or more kinds might be combined so as to be used. In addition, among these binders, the same kind or the different kinds might be used from the first layer 42a to the negative electrode surface layer.

As an example of the conductive assistant agent contained in the negative electrode composite material layer 42, it is possible to use the metal powder, such as silver, gold, and copper. As an example of the inorganic filler, it is possible to use aluminum hydroxide, silica, alumina, zirconia, titania, boehmite, magnesia, or the like.

The negative electrode composite material layer 42 is configured with a laminate structure consisting of n layers (n is a natural number being equal to or more than 2) from a first layer positioned closer to the negative electrode current collector foil 41 to a nth layer positioned closer to the separator 50. In other words, the negative electrode composite material layer 42 of the present embodiment has the multi-layer structure in which at least 2 or more composite material layers are laminated. Incidentally, here, a layer positioned closer to the separator 50 on the negative electrode composite material layer 42 (in short, the nth layer 42n) is referred to as a surface layer 44. Additionally, in a case where the negative electrode composite material layer 42 is configured with a laminate structure having 3 or more layers, a layer provided between the first layer 42a closer to the negative electrode current collector foil 41 and the surface layer 44 closer to the separator 50 is referred to as a middle layer 43. As shown in FIG. 3, the negative electrode composite material layer 42 of the present embodiment includes the first layer 42a provided on the negative electrode current collector foil 41, and includes a composite material layer (the middle layer 43 and the surface layer 44) being provided on the first layer 42a and consisting of n layers. Incidentally, in the present description, the middle layer 43 represents one layer or plural layers, unless otherwise particularly described.

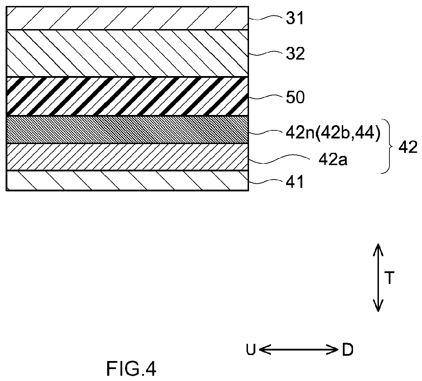

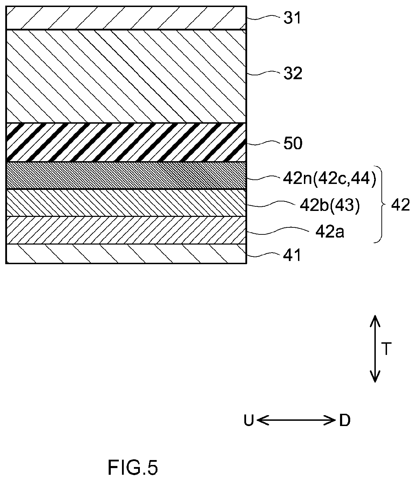

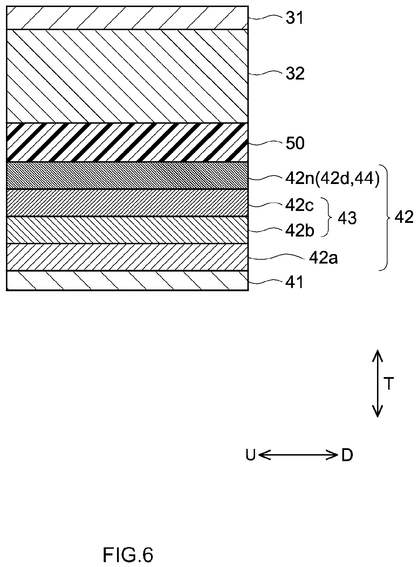

A layer number of the negative electrode composite material layer 42 is not particularly restricted, unless significantly spoiling the technique of the present disclosure. In other words, the layer number of the negative electrode composite material layer 42 is configured with the laminate structure having 2 or more layers. For example, as shown in FIG. 4, in a case of n = 2, it is as one embodiment to be the negative electrode composite material layer 42 having 2 layers. Incidentally, in that case, the surface layer 44 indicates a second layer 42b. As shown in FIG. 5, in a case of n = 3, it is as one embodiment to be the negative electrode composite material layer 42 having 3 layers. Incidentally, in that case, the negative electrode middle layer 43 indicates the second layer 42b. In addition, the surface layer 44 indicates a third layer 42c. As shown in FIG. 6, in a case of n = 4, it is as one embodiment to be the negative electrode composite material layer 42 having 4 layers. In that case, the middle layer 43 indicates the second layer 42b and the third layer 42c. In addition, the surface layer 44 indicates a fourth layer 42d.

A thickness of each layer, from the first layer 42a to the surface layer 44, is not particularly restricted. However, from a perspective of further surely suppressing the precipitation of the metal lithium, it is preferable to make the surface layer 44 have a certain thickness. An upper limit value of the thickness of the surface layer 44 is, from a perspective of maintaining the battery performance, preferably equal to or less than 100 $\mu$m, further preferably equal to or less than 80 $\mu$m, or furthermore preferably equal to or less than 60 $\mu$m. A lower limit value of the thickness of the surface layer 44 is, from a perspective of suppressing the precipitation of the metal lithium, preferably equal to or more than 10 $\mu$m, further preferably equal to or more than 20 $\mu$m, or furthermore preferably equal to or more than 30 $\mu$m. In addition, from a perspective of maintaining the capacity of the lithium ion battery, regarding the first layer 42a or the middle layer 43, it is preferable to provide a certain thickness on each layer. An upper limit value of the thickness of the first layer 42a or the middle layer 43 is, from a perspective of suppressing the precipitation of the metal lithium, preferably equal to or less than 200 $\mu$m, further preferably equal to or less than 180 $\mu$m, or furthermore preferably equal to or less than 160 $\mu$m. A lower limit value of the thickness of the first layer 42a or the middle layer 43 is, from a perspective of enhancing the capacity maintenance rate after the cycle, preferably equal to or more than 30 $\mu$m, further preferably equal to or more than 40 $\mu$m, or furthermore preferably equal to or more than 50 $\mu$m.

Incidentally, the thickness of each layer contained in the negative electrode composite material layer 42 can be measured by a procedure described below. At first, a measurement based on a TEM-EELS spectrum analysis method is performed under a condition of a complete electric discharge, and a binder content amount is measured at each of 8 measurement points aligned along a thickness direction of the negative electrode composite material layer 42. Then, a change amount of the binder content amounts between 2 measurement points which are positioned adjacent to each other. Then, when 3 or more measurement points, each of which has the change amount of the binder content rate exceeding 1.5%, are successively present, a middle measurement point among these successive measurement points is treated as a portion where the layer is changed. Based on this portion where the layer is changed, it is possible to measure the thickness of each layer.

A content rate (A) of the binder in the n$^{th}$ layer 42n (in other words, the surface layer 44) satisfies to be typically equal to or more than 5.0 wt% and not more than 35.0 wt% when a total weight of a solid content of the n$^{th}$ layer 42n (in other words, the surface layer 44) is treated as 100 wt%. By making the n$^{th}$ layer 42n (in other words, the surface layer 44) have the higher binder content rate (in particular, equal to or more than 5.0 wt%), it is possible to suppress the precipitation of the metal lithium, and to enhance the capacity maintenance rate after the cycle. In addition, by making the binder content rate (A) of the n$^{th}$ layer 42n (in other words, the surface layer 44) be equal to or less than 35.0 wt%, it is possible, while maintaining the electrically conductive property for the whole negative electrode, to store the lithium ion. From a perspective of suppressing the precipitation of the metal lithium, the lower limit value is preferably equal to or more than 8.0 wt%, further preferably equal to or more than 10.0 wt%, or the furthest preferably equal to or more than 13.0 wt%. In addition, by reducing the content rate of the binder, it is possible to contribute in securing the conductivity of the lithium ion. Therefore, the upper limit value is preferably equal to or less than 30.0 wt%, further preferably equal to or less than 25.0 wt%, or furthermore preferably equal to or less than 20.0 wt%. Incidentally, as the layer number is increased more, the thickness of the composite material layer is also increased more and thus a mechanical strength of the composite material layer becomes higher. On the other hand, the composite material layer having the larger thickness lacks a flexibility, and it tends to easily cause a crack at a manufacturing step of the electricity storage device. In particular, at the surface vicinity of the composite material layer, a stress is concentrated by winding or the like. The composite material layer 42 of the present embodiment includes the higher content rate of the binder at a position closer to the surface layer 44. Thus, a binding property becomes stronger at the position closer to the surface layer 44, and thus it is possible to reduce the crack caused at the manufacturing step of the electricity storage device.

A content rate (B) of the binder in the first layer of the negative electrode composite material layer positioned closer to the negative electrode current collector foil disclosed herein is decided by a ratio with respect to the content rate (A) of the binder in the surface layer 44 (in other words, the n$^{th}$ layer 42n). In other words, when the solid content total weight of the first layer is treated as 100 wt%, a formula (1) $1.10 \leq A/B \leq 62.50$ is satisfied. By doing this, at the electrically charging time, the lithium ion tends to easily spread out even to the current collector foil vicinity of the negative electrode composite material layer, and thus it is possible to maintain the battery performance. In addition, it is enough for an upper limit value of the A/B to be equal to or less than 100. If the A/B exceeds 100, the average resistance value of the whole negative electrode is increased and the high rate characteristic is reduced. From a perspective of maintaining the battery performance, the upper limit value of the A/B might be equal to or less than 45.00, is preferably equal to or less than 32.50, is further preferably equal to or less than 20.00, or furthermore preferably equal to or less than 16.25. From a perspective of suppressing the precipitation of the metal lithium, the lower limit value of the A/B is preferably equal to or more than 3.25, further preferably equal to or more than 4.50, or furthermore preferably equal to or more than 6.50.

An average resistance value of the negative electrode composite material layer 42 is equal to or more than 15 $\Omega/cm^2$ and not more than 50 $\Omega/cm^2$. By doing this, it exhibits the effects of suppressing the precipitation of the lithium ion and securing the conductivity. From a perspective of further suppressing the precipitation of the lithium ion, the lower limit value is preferably equal to or more than 20 $\Omega/cm^2$, further preferably equal to or more than 22 $\Omega/cm^2$, or the furthest preferably equal to or more than 25 $\Omega/cm^2$. In addition, from a perspective of maintaining the conductivity of the lithium ion, the upper limit value of the average resistance value is preferably equal to or less than 48 $\Omega/cm^2$, further preferably equal to or less than 45 $\Omega/cm^2$, or furthermore preferably equal to or less than 43 $\Omega/cm^2$.

The electricity storage device including the electrode, which includes the composite material layer 42 having the multi-layer laminate structure where the binder content rate is increased from the current collector foil 41 side to the separator 50 side as described above, can suppress the precipitation of the metal lithium without reducing the capacity maintenance rate. In general, the electricity storage device is configured to suppress the resistance of the electrode for making the lithium ion move easily, in order to enhance the capacity maintenance rate after the cycle and the high rate characteristic. However, if the resistance of the electrode is excessively reduced, the metal lithium becomes to easily precipitate at the electrically charging time. The inventors have found that, since the resistance value of the surface layer of the composite material layer is too lower, the lithium ion is saturated at a position near the interface of the separator and the composite material layer before being stored on the whole composite material layer, and then precipitates as the metal. With respect to this matter, the electricity storage device in accordance with the present embodiment includes the composite material layer 42 having the laminate structure. The composite material layer 42 having this laminate structure is set to have the binder content rate, of the surface layer 44 closer to the separator 50, being higher and being 5.0 wt% to 35.0 wt%. By doing this, the resistance value at the vicinity of the interface of the separator 50 and the composite material layer 42 is increased, and thus it is possible to suppress the precipitation of the metal lithium. In addition, the binder content rate of the layer closer to the current collector foil 41 is suppressed to be within a certain range (here, $1.10 \leq A/B \leq 62.5$), with treating the surface layer 44 as a reference. By doing this, the resistance value at the current collector foil 41 side is reduced, the electrically conductive properties of the current collector foil 41 and the composite material layer 42 can be suitably maintained, and thus it is possible to suppress the capacity maintenance rate after the cycle from being reduced. By making the binder content rate at the current collector foil 41 side be lower, the average resistance of the whole electrode is reduced (in particular, 50 $\Omega/cm^2$), and thus it is possible to maintain the battery performance. Incidentally, as described later, the laminate structure of the composite material layer 42 in accordance with the present embodiment can be applied to the positive electrode 30, too. However, as explained here, the composite material layer 42 having the above described laminate structure is to exhibit the higher effect on the negative electrode 40 configured to store the lithium ion at the electrically charging time.

By adjusting an increase amount of the binder content rate of each layer, it is possible, while suppressing the lithium ion response, to suitably spread out the lithium ion over the whole negative electrode composite material layer 42. It is preferable that a binder content rate (C) of an arbitrary layer of the negative electrode composite material layer 42 when a solid content weight of a whole of the arbitrary layer is treated as 100 wt% and a binder content rate (D) when a solid content weight of a layer adjacent to the arbitrary layer at the negative electrode current collector foil side 41 in a laminate direction (a thickness direction T) is treated as 100 wt% satisfy a formula (2) $1.10 \leq C/D \leq 16.10$. By doing this, a gradient of the binder content rates between layers becomes gentle. Regarding the effect described above, the difference of the conductivities of the charge carriers between the adjacent two layers becomes smaller, and thus it is possible to suppress the precipitation of the metal lithium between the layers. From a perspective of suppressing the precipitation of the metal lithium and enhancing the capacity maintenance rate of the electricity storage device, the lower limit value of the C/D might be equal to or more than 1.10, is preferably equal to or more than 1.25, is further preferably equal to or more than 1.80, or is furthermore preferably equal to or more than 2.10. In addition, by setting the upper limit value, it is possible at the movement to the current collector foil side to suitably store the charge carrier, and thus it is possible to contribute in maintaining the high rate characteristic and the capacity maintenance rate of the electricity storage device. The upper limit value of the C/D might be equal to or less than 16.10, is preferably equal to or less than 15.00, is further preferably equal to or less than 10.50, or furthermore preferably equal to or less than 9.00.

The negative electrode composite material layer 42 of the herein disclosed electricity storage device might include a middle layer 43 that is positioned between the first layer 42a and the surface layer 44 in a laminate direction (a thickness direction T) of the negative electrode composite material layer 42. Regarding the negative electrode composite material layer 42 of the present embodiment, each of the layers, from the first layer 42a positioned closer to the negative electrode current collector foil 41 to the $n^{th}$ layer 42n positioned closer to the separator 50, has a different binder content rate. In addition, the binder content rate of each layer is gradually increased from the vicinity of the negative electrode current collector foil 41 toward the vicinity of the opposed separator 50 in the laminate direction (the thickness direction T) of the negative electrode composite material layer 42. A thickness and the binder content rate of each layer can be measured according to a procedure of the above described TEM-EELS spectrum analysis scan.

The negative electrode composite material layer 42 of the herein disclosed electricity storage device is configured, for example, to have the laminate structure including 3 or more layers. As the layer number of the negative electrode composite material layer 42 is increased more, the metal becoming the charge carrier becomes further easily diffused, and thus it is possible to uniformly move it over the whole negative electrode composite material layer. Therefore, it is possible to further suppress the precipitation of the lithium ion.

Regarding the negative electrode composite material layer 42 of the herein disclosed electricity storage device, it is good for the binder content rate of each layer to be gradually increased from the negative electrode current collector foil 41 vicinity toward the opposed separator 50 vicinity in the laminate direction (the thickness direction T) of the negative electrode composite material layer 42. In other words, on the negative electrode composite material layer 42, it is good for the binder content rate of each layer to be changed so as to be increased from the first layer 42a toward the $n^{th}$ layer 42n (in other words, the surface layer 44). By doing this, the resistance value becomes smaller as being positioned closer to the negative electrode current collector foil. In other words, a gradation of the binder content rates of respective layers can be made. As this result, at the electrically charging time, the metal becoming the charge carrier becomes easily diffused, and thus it is possible to uniformly move it over the whole negative electrode composite material layer.

In addition, regarding the negative electrode composite material layer 42 from the first layer 42a to the $n^{th}$ layer 42n, it is preferable that the above described C/D becomes smaller as the n becomes larger from 1. For example, an increase amount of the binder content rates from the second layer 42b to the third layer 42c is smaller than an increase amount of the binder content rates from the first layer 42a to the second layer 42b. By doing this, the resistance value is gently increased more, as positioned closer from the negative electrode current collector foil 41 to the separator 50. When the lithium ion moves between the layers, it is possible to decrease the precipitation of the metal lithium caused by the drastic change of the resistance values.

The negative electrode composite material layer 42 might include a void, unless significantly spoiling the effects of the technique according to the present disclosure. In a case where the negative electrode composite material layer 42 includes the void, a void rate of the negative electrode composite material layer 42 might be equal to or more than 5% and not more than 35%. If the void rate is higher, the composite material layer becomes easily cracked and the resistance is also increased, and therefore it is preferable that the void rate of the negative electrode composite material layer 42 is equal to or less than 30%. In addition, from a perspective of implementing the higher capacity of the electricity storage device, the void rate of the negative electrode composite material layer 42 is further preferably equal to or less than 20%, or the furthest preferably equal to or less than 10%. Incidentally, the void rates from the first layer to the negative electrode surface layer might be the same, or might be different from each other.

The resistance value of the surface layer 44 is not particularly restricted, unless significantly spoiling the effects of the technique according to the present disclosure. From a perspective of maintaining the conductivity of the lithium ion, the upper limit value of the resistance value of the surface layer 44 might be equal to or less than 150 $\Omega$/cm$^2$, is preferably equal to or less than 140 $\Omega$/cm$^2$, is further preferably equal to or less than 130 $\Omega$/cm$^2$, or furthermore preferably equal to or less than 120 $\Omega$/cm$^2$. In addition, from a perspective of suppressing the precipitation of the lithium ion, the lower limit value of the resistance value of the surface layer 44 might be equal to or more than 10 $\Omega$/cm$^2$, is preferably equal to or more than 15 $\Omega$/cm$^2$, is further preferably equal to or more than 20 $\Omega$/cm$^2$, or is the furthest preferably equal to or more than 25 $\Omega$/cm$^2$.

The resistance value of the first layer 42a is not particularly restricted, unless significantly spoiling the effects of the technique according to the present disclosure. From a perspective of securing the electrically conductive property with the negative electrode current collector foil 41, the upper limit value of the resistance value of the first layer 42a might be equal to or less than 30 $\Omega$/cm$^2$, is preferably equal to or less than 28 $\Omega$/cm$^2$, is further preferably equal to or less than 27 $\Omega$/cm$^2$, or is furthermore preferably equal to or less than 25 $\Omega$/cm$^2$. In addition, the lower limit value of the resistance value of the first layer 42a might be equal to or more than 2 $\Omega$/cm$^2$, might be equal to or more than 3 $\Omega$/cm$^2$, might be equal to or more than 4 $\Omega$/cm$^2$, or might be equal to or more than 5 $\Omega$/cm$^2$.

<Positive electrode and positive electrode composite material layer>

As shown in FIG. 2, the positive electrode 30 includes a positive electrode current collector foil 31 that is formed in a rectangular shape, and includes a positive electrode composite material layer 32 that is formed on a surface of the positive electrode current collector foil 31. Incidentally, it is enough for the positive electrode composite material layer 32 to be formed on one surface or both surfaces (here, on the both surfaces) of the positive electrode current collector foil 31. In addition, as shown in FIG. 1 and FIG. 2, the positive electrode 30 might include a positive electrode composite material layer non-formation portion 31a where the positive electrode composite material layer 32 is not formed and the positive electrode current collector foil 31 is exposed. The positive electrode composite material layer non-formation portion 31a is provided to protrude from one end of the laminate electrode assembly 20. Onto the positive electrode composite material layer non-formation portion 31a, it is possible to join the positive electrode inside terminal 16.

For example, a material quality of the positive electrode current collector foil 31 is an aluminum or an aluminum alloy. As the positive electrode active material of the positive electrode composite material layer 32, it is possible to use a positive electrode active material that is used in the positive electrode of the general lithium ion secondary battery. In particular, the positive electrode active material is a lithium composite metal oxide having a layered rock salt structure, a spinel structure, an olivine structure, or the like. It is possible as the lithium composite metal oxide to use $LiCoO_2$, $LiNiO_2$, $LiFeO_2$, $LiNi_{1/3}Co_{1/3}Mn_{1/3}O_2$ (NCM), $LiNi_{0.5}Mn_{1.5}O_4$, $LiNi_{0.8}Co_{0.15}Al_{0.05}O_2$ (NCA), $LiCrMO_4$, $LiMn_2O_4$, $LiFePO_4$ (LFP), or the like. Incidentally, among these positive electrode active materials, only one kind might be used, or, two or more kinds might be combined so as to be used. Among them, from a perspective of enhancing the cycle characteristic of the electricity storage device, it is preferable that the positive electrode active material is the NCM.

Incidentally, the average resistance value of the positive electrode composite material layer 32 is not particularly restricted, unless significantly spoiling the technique of the present disclosure. If the average resistance value of the positive electrode composite material layer 32 is lower, it is possible to exhibit a superior output property, and thus an upper limit value of the resistance value of the positive electrode composite material layer 32 is preferably equal to or less than 25 $\Omega/cm^2$, further preferably equal to or less than 20 $\Omega/cm^2$, or furthermore preferably equal to or less than 15 $\Omega/cm^2$. In addition, the lower limit value might be equal to or more than 1 $\Omega/cm^2$, might be equal to or more than 2 $\Omega/cm^2$, or might be equal to or more than 3 $\Omega/cm^2$.

<Separator>

The herein disclosed separator 50 is a porous sheet having an electrically insulating property, but neither the shape nor the size are particularly restricted, and thus these should be suitably decided in accordance with the battery design. Typically, since the separator 50 has to establish an electrical insulation between the positive electrode and the negative electrode, the size of the separator 50 is larger than the positive electrode 30 and the negative electrode 40. In addition, regarding a material quality of the separator 50, it is possible to use a well known separator used for the electricity storage device, and thus it is not particularly restricted. For example, as the separator 50, it is possible to suitably use a polyolefin, such as polyethylene and polypropylene, or a resin, such as polyester, cellulose, and polyamide. In addition, the surface of the separator 50 might be provided with a heat resistance layer, unless significantly spoiling the effects of the technique according to the present disclosure. Regarding a membrane thickness of the separator 50, in consideration of a balance of the capacity density of the electricity storage device and the strength of the current collector body, the lower limit value is preferably equal to or more than 5 $\mu$m, further preferably equal to or more than 8 $\mu$m, or furthest preferably equal to or more than 10 $\mu$m. In addition, an upper limit value of the membrane thickness of the separator 50 is preferably equal to or less than 40 $\mu$m, further preferably equal to or less than 30 $\mu$m, or furthest preferably equal to or less than 20 $\mu$m.

<Resistance ratio of positive electrode and negative electrode>

A resistance ratio of the positive electrode and the negative electrode of the herein disclosed electricity storage device is not particularly restricted. In a case where an average resistance value of the positive electrode 30 is treated as $\alpha$, it is preferable that a resistance value (X) of the negative electrode surface layer 44 satisfies a formula (3): $1.0 < X/\alpha < 20.0$. Regarding the electricity storage device that includes the electrode assembly satisfying the formula (3), the resistance value of the positive electrode composite material layer 31 becomes smaller than the resistance value of the surface layer 44 of the negative electrode composite material layer 42 positioned closer to the separator 50. By doing this, at the electrically charging time, the lithium ion can suitably move from the positive electrode to the negative electrode, and thus it is possible to enhance the high rate characteristic. From a perspective of enhancing the capacity maintenance rate, a lower limit value of the $X/\alpha$ is preferably equal to or more than 2.0, further preferably equal to or more than 4.0, or furthermore preferably equal to or more than 6.0. In addition, from a perspective of maintaining the battery performance, an upper limit value of the resistance ratio of the positive electrode and the negative electrode is preferably equal to or less than 18.0, further preferably equal to or less than 15.0, or furthermore preferably equal to or less than 10.0.

<Manufacturing method of laminate type composite material layer>

One embodiment of the herein disclosed manufacturing method of the electrode includes a step of preparing the composite materials for the first layer to the $n^{th}$ layer, and a step of sequentially laminating the composite material layers from the first layer to the $n^{th}$ layer (n is a natural number being equal to or more than 2) on the electrode current collector foil and drying them. In the manufacturing method of the electrode of the present disclosure, the drying the layers after the second layer is performed while preventing the movement of the binder contained in the composite material composition to the different layer caused by the convection of the solvent. In addition, regarding the composite material layers from the first layer to the $n^{th}$ layer, the content rate of the binder is increased more as the n becomes larger from 1. Below, while the negative electrode 40 is used as an example, an example of the manufacturing method of the electrode disclosed herein would be described in detail.

<First step S10>

The manufacturing method of the electrode of the present embodiment includes, at first, the step (hereinafter, which will be referred to as "composite material preparation step", too) of preparing the negative electrode composite material for the first layer 42a to the n$^{th}$ layer 42n (in other words, the surface layer 44) shown by FIG. 3. At the composite material preparation step of the present embodiment, the negative electrode composite materials for the first layer 42a to the n$^{th}$ layer 42n are prepared in which at least the active material and the binder are dispersed into a suitable solvent (an ion exchange water, an organic solvent, or the like). In addition, the negative electrode composite materials for the first layer 42a to the n$^{th}$ layer 42n at that time are prepared to increase the content rates of the binder more in accordance with the number being larger from 1 to n. Here, the content rate of the binder is decided on the basis of a weight of the binder at a case where the solid content total weight of each layer is treated as 100 wt%. Incidentally, the negative electrode composite material is a composition being in a paste form (a slurry form, or an ink form). For a kneading of the negative electrode composite material, it is possible to suitably use a conventionally known stirring/mixing equipment, such as ball mill, roll mill, mixer, disper, and kneader. A kneading time would be set to be a time required for equally dispersing the negative electrode active material and the binder. Although the time might be different in accordance with an equipment configuration or a kneading condition, it is typically 10 minutes to 3 hours, or preferably 10 minutes to 30 minutes.

Incidentally, it is possible to make the paste form composition prepared at the composite material preparation step contain an arbitrary component other than the above described component, unless significantly spoiling the effect of the present disclosure. As the arbitrary component described above, it is possible to use a conductive assistant agent, an inorganic filler, or the like.

<Second step S20>

Here, the negative electrode composite material layers, being from the first layer 42a to the surface layer 44, are sequentially laminated on the negative electrode current collector foil and then dried. At first, the negative electrode composite material for the first layer 42a prepared at the composite material preparation step is applied to coat the negative electrode current collector foil 41 (hereinafter, which would be referred to as "first coating step", too). For coating with the negative electrode composite material, it is possible to suitably use, for example, a conventionally known coating equipment, such as slit coater, die coater, comma coater, gravure coater, and dip coater. Incidentally, the negative electrode composite material might be applied to coat both surfaces of the negative electrode current collector foil 41 or might be applied to coat only one surface. In addition, without applying the negative electrode composite material to coat a part of the negative electrode current collector foil 41, a negative electrode composite material layer non-formation portion 41a might be provided.

The negative electrode composite material applied to coat the negative electrode current collector foil 41 at the first coating step is dried so as to form the first layer 42a (hereinafter, which might be referred to as "first drying step", too). At the first drying step, a drying means is not particularly restricted. For example, it is possible to suitably use a conventionally known drying equipment, such as hot air drying equipment, vacuum drying equipment, dry air, and infrared.

Next, as shown in FIG. 3 to FIG. 5, onto the surface of the first layer 42a, the negative electrode composite material for the second layer 42b is applied to coat (hereinafter, which might be referred to as "second coating step", too). Incidentally, the second coating step is to be also a step of applying the negative electrode composite material for the n$^{th}$ layer 42n onto the surface of the n-1$^{th}$ layer 42n-1 to coat. At the second coating step, applying the negative electrode composite material to coat can be performed by a method similar to the first coating step. An applying speed for coating onto each layer is not particularly restricted, unless significantly spoiling the technique of the present disclosure. It is preferable that the applying speed of the negative electrode composite material for coating onto layers after the second layer is equal to or more than 0.5 times and not more than 0.8 times as the applying speed onto the first layer 42a. Since the surface of each layer has a concave and convex part, it is possible by making the applying speed be slower to inhibit uneven thicknesses of the layers.

When the negative electrode composite material is dried after the second coating step (in other words, the step for the layer after the 2$^{th}$ layer), it is performed to make the binder contained in the composite material be inhibited from being moved to another layer due to the convection of the solvent. Since the composite material before being dried has a flowability, the conventionally known drying method happens to cause an uneven distribution (migration), in which the binder contained in the composite material layer moves to the surface side of the composite material layer by the convection of the solvent, according to excessive heating or solvent evaporation. In the manufacturing method of the electrode of the present embodiment, it is performed by drying for a time equal to or more than 5 minutes and not more than 15 minutes (for example, in a dry atmosphere, under an atmospheric pressure, at 150 °C temperature). By doing this, in the electrode composite material layer having the multi-layer structure, the binder of each layer can not be uniformed, and thus it is possible to maintain the content rates of the binders on respective layers being different from each other. Incidentally, as for the drying means, while making it be exposed to the dry air in a drying furnace, the drying is performed typically at a temperature equal to or less than a melting point of the binder (for example, 100 °C to 150 °C), for example, for 15 minutes. It is good that the drying air speed is set to be approximately 1 m/second to 15 m/second.

Regarding the drying for the layer after the second layer, it is possible by drying for a period equal to or more than 5 minutes and not more than 15 minutes to suppress uniformalization of the binders. As this reason, the composite material after the second layer before being dried has the flowability, and thus it is thought that, by drying for a short period (in particular, equal to or less than 15 minutes), the binder was suppressed from moving into the void of an under layer.

In the manufacturing method of the electrode in accordance with the herein disclosed one embodiment, the above described second coating step and second drying step are repeatedly performed until the arbitrary layer number n (n is a natural number being equal to or more than 2) of the composite material layer is satisfied. For example, in a case of n = 3, as shown in FIG. 4, the third layer 42c is applied to coat the surface of the second layer 42b on which the application to coat is performed at the second drying step. Then, the third layer 42c on which the application to coat has been performed is dried at a drying condition (in other words, the second drying step) similar to the second layer 42b. In that case, it is preferable at the composite material preparation step to previously adjust the binder content rate so as to make the content rate of the binder of the third layer 42c be higher than the content rate of the binder of the second layer 42b. From a perspective of enhancing the manufacture efficiency by reducing the number of steps, it is preferable that the layer number n of the composite material layers is equal to or less than 2, equal to or less than 3, equal to or less than 4, or equal to or less than 5.

After the drying, pressing or the like might be performed as needed for adjusting the density. The pressing process can be performed, for example, with a roll press machine, a flat plate press machine, or the like. By pressing, an anchor effect is exhibited between the layers of the composite material layers, and thus it is possible to enhance the strength of the electrode assembly. Incidentally, the number of the pressing processes is not particularly restricted. From a perspective of enhancing the manufacture efficiency by reducing the number of steps, the applying to coat and drying might be repeated to reach the arbitrary layer number n of the composite material layers and might perform pressing only one time at the last. In addition, the pressing might be performed, after applying to coat the composite material of each layer and then drying it. By performing the pressing on each of layers, it is possible to inhibit the binder from flowing into the void of each layer so as to suppress the migration of the binder from being caused.

By the manufacturing method of the electrode as described above, it is possible, without heating the composite material, to form the composite material layer having the multi-layer structure. In other words, it is possible to suppress the binder contained in the composite material from being unevenly distributed due to the convection of the solvent. By doing this, it is possible to make the concentration gradient of the binders from the current collector foil vicinity to the separator vicinity. Incidentally, the manufacturing method of the electrode of the present embodiment can manufacture the positive electrode 30 according to this, too.

Above, the preferred embodiment of the present disclosure has been explained on the basis of drawings, but these explanations are not restriction matter, and thus they can, of course, be modified. For example, the configuration of the negative electrode composite material layer 42 for the above described negative electrode 40 can be applied to the positive electrode composite material layer 32. However, in that case, various materials are changed to be those generally used for the positive electrode of the electricity storage device. Even in a case where the technique of the present embodiment is applied to the positive electrode, the resistance value at the interface between the separator and the positive electrode composite material layer becomes higher, and thus the drastic movement of the lithium ion from the positive electrode to the negative electrode at the electrically charging time can be suppressed.

[Practical example]

Below, practical examples and comparative examples are shown, so as to particularly explain the electricity storage device of the present disclosure. Here, the case of n = 3, in other words, the negative electrode composite material layer having the 3-layer laminate structure is used as an example for the explanation. Incidentally, it is not intended to make the present disclosure be restricted into the practical example described below.

<Practical example 1: Manufacture of positive electrode sheet>

As the positive electrode active material, 97.5 wt% of NCM powder, as the binder, 1.5 wt% of PVDF, and as the conductive assistant agent, 1.0 wt% of CNT were mixed, so that a paste for forming the positive electrode composite material layer was prepared. Incidentally, as the solvent, N-methyl-2-pyrrolidone (NMP) was used. Then, an aluminum foil whose thickness was 13 μm was prepared. The paste for forming the positive electrode composite material layer was applied to coat the both surfaces of the aluminum foil. At that time, it was adjusted to make the thickness in which the aluminum foil and the positive electrode composite material layers on both surfaces of it were added (in other words, an average membrane thickness of the positive electrode) be 140 μm, and the coating was performed. After the coating for the positive electrode composite material layer was performed, a natural drying was performed and then a heat drying at 120 °C was performed. Then, while remaining a conductive part, the resultant was cut to be length 45 cm x width 35 cm, so as to manufacture the positive electrode sheet.

<Practical example 1: preparation of composite material for negative electrode sheet>

As the negative electrode active material, 96.6 wt% of graphite particle, and as binder, 0.4 wt% of SBR were mixed, so that a paste for forming the first layer was prepared. As the negative electrode active material, 95.6 wt% of graphite particle, and as binder, 4.4 wt% of SBR were mixed, so that a paste for forming the second layer was prepared. As the negative electrode active material, 92.0 wt% of graphite particle, and as binder, 8.0 wt% of SBR were mixed, so that a paste for forming the third layer was prepared. Incidentally, as the solvent, an ion exchange water was used.

<Practical example 1: Applying to coat and drying of first layer>

Next, a copper foil whose thickness was 8 μm was prepared. The paste for forming the first layer was applied to coat the both surfaces of the copper foil. In addition, it was adjusted to make the thickness of one surface of the first layer be 60 μm, and the coating was performed. After the coating for the first layer, a natural drying was performed and then a heat drying at 120 °C was performed.

<Practical example 1: Applying to coat and drying of second to third layers>

After drying the first layer, the paste for forming the second layer was applied to coat the surface of the first layer. At that time, it was adjusted to make the thickness of one surface of the second layer be 60 μm, and the coating was performed. After the coating for the second layer was performed, the drying was performed in the dry atmosphere, under the atmospheric pressure, at 150 °C temperature, for a period equal to or more than 5 minutes and not more than 15 minutes. In addition, after the drying for the second layer was performed, the paste for forming the third layer was applied to coat the surface of the second layer. At that time, it was adjusted to make the thickness of one surface of the third layer be 60 μm, and the coating was performed. Incidentally, for the coating for each layer, a comma coater (registered trademark) was used. After the coating for the third layer was performed, it was dried in the dry atmosphere, under an atmospheric pressure, at 150 °C temperature, for a period equal to or more than 5 minutes and not more than 15 minutes, and then the resultant was pressed. Then, while remaining a conductive part, the resultant was cut to be length 50 cm x width 40 cm, so as to manufacture the negative electrode sheet.

<Manufacture of laminate type three-electrode cell>

For measurements of the resistance value and capacity maintenance rate described below, a laminate type three-electrode cell was used which was configured with a positive electrode sheet, a reference electrode (RE), a negative electrode sheet, a separator, and a nonaqueous electrolytic solution. The reference electrode was manufactured with a platinum wire and did include a conductive part and a coated part that was coated with LFP. As the separator, two porous polyolefin sheets were prepared, each of which had a size being length 53 cm x width 43 cm, a thickness being 16 μm, and a material quality being polyethylene. The positive electrode sheet, the separator, the reference electrode, the separator, and the negative electrode sheet were put on in this order, and then sealed with an aluminum/PP laminate film to make each conductive part be exposed, so as to manufacture the laminate type three-electrode cell. Incidentally, as the nonaqueous electrolytic solution, one in which a supporting salt ($LiPF_6$) is dissolved into an organic mixed solvent (EC : EMC : DMC = 3 : 3 : 4) to make about 1.15 mol/L concentration was used. Terminals were connected to the reference electrode and the negative electrode of this laminate type triode cell, and a preliminary electric charge was performed by 0.6 C until an electric charge rate (SOC) 50%.

<Measurement of resistance value>

At 25 °C, an AC impedance measurement method (Frequency range: 10000 Hz to 10 mHz, Applied voltage: 30 mV) was performed, and then the resistance value was measured. The resistance value at 1000 Hz to 50 mHz was treated as the positive electrode resistance value or the negative electrode resistance value, and divided by an area size ($cm^2$) of the positive electrode or the negative electrode sheet, and thus each resistance value ($\Omega/cm^2$) was calculated.

<Manufacture of laminate type two-electrode cell>

For a measurement of the capacity maintenance rate described below, a laminate type two-electrode cell was used which was configured with the positive electrode sheet, the negative electrode sheet, the separator, and the nonaqueous electrolytic solution. As the separator, one porous polyolefin sheet was prepared, which had a size being length 53 cm x width 43 cm, a thickness being 16 $\mu$m, a material quality being polyethylene. The positive electrode sheet, the separator, and the negative electrode sheet were put on in this order, and then sealed with the aluminum/PP laminate film to make each conductive part be exposed, so as to manufacture the laminate type two-electrode cell. Incidentally, as the nonaqueous electrolytic solution, one in which the supporting salt (LiPF$_6$) is dissolved to make about 1.15 mol/L concentration into the organic mixed solvent (EC : EMC : DMC = 3 : 3 : 4) was used.

<Measurement of capacity maintenance rate>

A heat equalizing treatment was performed on the laminate type two-electrode cell in a thermostatic chamber at 25 °C for 1 hour. The electric charge and electric discharge was repeated 2 times by 0.1 C constant current, between 4.2 V and 3.0 V. An electric discharge capacity obtained by the second electric charge and electric discharge was treated as an initial electric discharge capacity. Then, after the electric charge was performed by 3 C constant current until 4.2 V, the electric discharge was performed by 1 C constant current until 3.0 V A combination of the above described 3 C electric charge and 1 C electric discharge was treated as 1 cycle, and then this was repeated to be 100 cycles. After that, the electric charge and electric discharge was performed one time by 0.1 C constant current between 4.2 V and 3.0 V, and then the obtained electric discharge capacity was treated as a post-cycle electric discharge capacity. The capacity maintenance rate (%) was calculated by dividing the post-cycle electric discharge capacity by the initial electric discharge capacity and then by representing the resultant by percentage.

<Practical examples 2 to 6 and comparative examples 1 to 5>

Except that a mixing rate of a constituent component (the binder) was changed as shown in Table 1, they were similar to the practical example 1.

[Table 1]

Table 1

| | Negative electrode: binder content rate [wt%] | | | Content ratio of binder | | Negative electrode resistance value [Ω/cm²] | | | | Capacity maintenance rate [%] | Score | |
|---|---|---|---|---|---|---|---|---|---|---|---|---|
| | First layer | Second layer | Third layer | Third-layer/First-layer | Third-layer/Second-layer | First layer | Second layer | Third layer | Average | | Average resistance value | Capacity maintenance rate |
| Practical example 1 | 0.4 | 4.4 | 8.0 | 20.00 | 1.82 | 2.93 | 27.49 | 49.27 | 26.56 | 87.5 | ○ | ○ |
| Practical example 2 | 0.4 | 4.4 | 13.0 | 32.50 | 2.95 | 2.93 | 27.49 | 81.93 | 37.45 | 92.9 | ○ | ○ |
| Practical example 3 | 0.4 | 4.4 | 25.0 | 62.50 | 5.68 | 2.93 | 27.49 | 119.30 | 49.91 | 93.5 | ○ | ○ |
| Practical example 4 | 0.8 | 4.4 | 13.0 | 16.25 | 2.95 | 5.17 | 27.49 | 81.93 | 38.20 | 93.2 | ○ | ○ |
| Practical example 5 | 2.0 | 4.4 | 13.0 | 6.50 | 2.95 | 17.36 | 27.49 | 81.93 | 42.26 | 93.4 | ○ | ○ |
| Practical example 6 | 4.0 | 4.4 | 13.0 | 3.25 | 2.95 | 24.77 | 27.49 | 81.93 | 44.73 | 93.5 | ○ | ○ |
| Comparative example 1 | 0.4 | 0.4 | 0.4 | 1.00 | 1.00 | 2.93 | 2.93 | 2.93 | 2.93 | 56.8 | ○ | × |
| Comparative example 2 | 13.0 | 13.0 | 13.0 | 1.00 | 1.00 | 81.93 | 81.93 | 81.93 | 81.93 | 92.2 | × | ○ |
| Comparative example 3 | 0.4 | 13.0 | 13.0 | 32.50 | 1.00 | 2.93 | 81.93 | 81.93 | 55.60 | 70.5 | × | × |
| Comparative example 4 | 0.4 | 40.0 | 13.0 | 32.50 | 0.33 | 2.93 | 245.24 | 81.93 | 110.03 | 58.2 | × | × |
| Comparative example 5 | 0.4 | 4.4 | 40.0 | 100.00 | 9.09 | 2.93 | 27.49 | 245.24 | 91.89 | 80.3 | × | ○ |

From a test result described below, in the comparative example 1 whose binder content rates from the first layer to the third layer were the same, the capacity maintenance rate was reduced. Additionally, in the comparative example 2 whose binder content rates of the second layer and the third layer were the same, and in the comparative example 4 whose binder content rate of the second layer was higher than the third layer, the capacity maintenance rate was reduced. On the contrary, in the practical examples 1 to 6, it was found that the capacity maintenance rate was higher and that the precipitation of the metal lithium was suppressed. Additionally, in the comparative examples 2 to 3 and 5, the binder content rate of the second layer or the third layer was higher, and thus the average resistance value of the negative electrode happened to become higher. In the comparative examples 2 to 3 and 5, although not shown in particular, an input and output of the electricity storage device (in other words, the high rate characteristic) was significantly reduced, and it was not possible to stabilize the battery performance.

Above, specific examples of the herein disclosed technique have been described in detail, but these are merely illustrations, and are not intended to restrict the scope of claims. The technique recited in claims contains matters in which the above-illustrated specific examples are various deformed or changed.

In the technology disclosed herein, each component or each process referred to herein may be omitted or combined as appropriate, to the extent that no particular problems arise. This description also includes the disclosures set forth in the following respective items.

Item 1: an electricity storage device, comprising: a positive electrode 30 that comprises a positive electrode current collector foil 31 and a positive electrode composite material layer 32; a negative electrode 40 that comprises a negative electrode current collector foil 41 and a negative electrode composite material layer 42; and a separator 50 that is disposed between the positive electrode 30 and the negative electrode 40, wherein the negative electrode composite material layer 42 comprises an active material and a binder, the negative electrode composite material layer 42 is configured with a laminate structure that consists of n layers (the n is a natural number being equal to or more than 2) from a first layer 42a positioned closer to the negative electrode current collector foil 41 to a $n^{th}$ layer 42n positioned closer to the separator 50, here, when a total weight of a solid content of the nth layer is treated as 100 wt%, a binder content rate (A) of the $n^{th}$ layer 42n is equal to or more than 5.0 wt% and not more than 35.0 wt%, when a total weight of a solid content of the first layer 42a is treated as 100 wt%, a relationship between a binder content rate (B) of the first layer 42a and the binder content rate (A) of the $n^{th}$ layer 42n satisfies a following formula (1); (1) $1.10 < A/B < 62.50$, and an average resistance value of the negative electrode composite material layer 42 is equal to or more than 15 $\Omega/cm^2$ and not more than 50 $\Omega/cm^2$.

Item 2: the electricity storage device according to item 1, wherein a binder content rate (C) of an arbitrary layer of the negative electrode composite material layer and a binder content rate (D) of a layer 42 positioned adjacent to the arbitrary layer at a side of the negative electrode current collector foil 41 in a thickness direction satisfy a following formula (2); (2) $1.10 < C/D < 16.10$.

Item 3: the electricity storage device according to item 2 or 3, wherein the negative electrode composite material layer 42 is configured with 3 or more layers.

Item 4: the electricity storage device according to any one of claims 1 to 3, wherein the binder content rate is gradually increased from the first layer 42a to the $n^{th}$ layer (42n) in the thickness direction of the negative electrode composite material layer 42.

Item 5: a method for manufacturing an electrode that comprises an electrode current collector foil and an electrode composite material layer and that comprises a laminate structure consisting of n layers (the n is a natural number being equal to or more than 2) from a first layer 42a positioned closer to the electrode current collector foil to a $n^{th}$ layer 42n positioned on a surface in a thickness direction of the electrode composite material layer, the method comprising: a step of preparing composite materials for the first layer 42a to the $n^{th}$ layer 42n; and a step of sequentially laminating composite material layers for the first layer 42a to the $n^{th}$ layer 42n onto the electrode current collector foil and of drying, wherein here, drying a layer after a second layer 42b is performed to inhibit binders contained in the composite materials from being moved into a different layer due to a convection of a solvent, the composite material layers from the first layer 42a to the $n^{th}$ layer 42n have content rates of the binders increasing more as the n becomes larger from 1.

## Claims

1. An electricity storage device, comprising:

   a positive electrode (30) that comprises a positive electrode current collector foil (31) and a positive electrode composite material layer (32);
   a negative electrode (40) that comprises a negative electrode current collector foil (41) and a negative electrode composite material layer (42); and
   a separator (50) that is disposed between the positive electrode (30) and the negative electrode (40), **characterized in that**

the negative electrode composite material layer (42) comprises an active material and a binder,
the negative electrode composite material layer (42) is configured with a laminate structure that consists of n layers (the n is a natural number being equal to or more than 2) from a first layer (42a) positioned closer to the negative electrode current collector foil (41) to a $n^{th}$ layer (42n) positioned closer to the separator (50),
here, when a total weight of a solid content of the $n^{th}$ layer (42n) is treated as 100 wt%, a binder content rate (A) of the $n^{th}$ layer (42n) is equal to or more than 5.0 wt% and not more than 35.0 wt%,
when a total weight of a solid content of the first layer (42a) is treated as 100 wt%, a relationship between a binder content rate (B) of the first layer (42a) and the binder content rate (A) of the $n^{th}$ layer (42n) satisfies a following formula (1);

$$(1)\ 1.10 \leq A/B \leq 62.50,$$

and
an average resistance value of the negative electrode composite material layer (42) is equal to or more than 15 $\Omega/cm^2$ and not more than 50 $\Omega/cm^2$.

2. The electricity storage device according to claim 1, wherein
a binder content rate (C) of an arbitrary layer of the negative electrode composite material layer (42) and a binder content rate (D) of a layer positioned adjacent to the arbitrary layer at a side of the negative electrode current collector foil (41) in a thickness direction satisfy a following formula (2);

$$(2)\ 1.10 \leq C/D \leq 16.10.$$

3. The electricity storage device according to claim 1 or 2, wherein
the negative electrode composite material layer (42) is configured with 3 or more layers.

4. The electricity storage device according to any claims 1 to 3, wherein
the binder content rate is gradually increased from the first layer (42a) to the $n^{th}$ layer (42n) in the thickness direction of the negative electrode composite material layer (42).

5. A method for manufacturing an electrode that comprises an electrode current collector foil and an electrode composite material layer and that comprises a laminate structure consisting of n layers (the n is a natural number being equal to or more than 2) from a first layer (42a) positioned closer to the electrode current collector foil to a $n^{th}$ layer (42n) positioned on a surface in a thickness direction of the electrode composite material layer, the method comprising:

a step of preparing composite materials for the first layer (42a) to the $n^{th}$ layer (42n); and
a step of sequentially laminating composite material layers (42) for the first layer (42a) to the $n^{th}$ layer (42n) onto the electrode current collector foil and of drying, wherein
here, drying a layer after a second layer (42b) is performed to inhibit binders contained in the composite materials from being moved into a different layer due to a convection of a solvent,
the composite material layers from the first layer (42a) to the $n^{th}$ layer (42n) have content rates of the binders increasing more as the n becomes larger from 1.

FIG.1

FIG.2

FIG.3

FIG.4

31
32
50
42n(42c,44)
42b(43)  } 42
42a
41

T

U ⟷ D

FIG.5

31

32

50

42n(42d,44)

42c
43 } 42
42b

42a

41

T

U ⟷ D

FIG.6

First step — S10

First coating step

First drying step

Second coating step

Second drying step

Second step — S20

$N^{th}$ coating step

$N^{th}$ drying step

FIG.7

Europäisches
Patentamt

European
Patent Office

Office européen
des brevets

## EUROPEAN SEARCH REPORT

**Application Number**

EP 24 21 2941

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 5 316862 B2 (TOYOTA IND CORP) 16 October 2013 (2013-10-16) | 1,2,4,5 | INV. H01M4/04 |
| Y | * abstract; claims 1-4; examples 2,3,7; table 1 *<br>* paragraphs [0070] - [0088] * | 3 | H01M4/62<br>H01M10/0525<br>H01M4/36<br>H01M4/1393 |
| X | CN 115 939 311 A (WEILAI BATTERY TECH ANHUI CO LTD) 7 April 2023 (2023-04-07) | 1,2,4 | H01M4/133 |
| Y | * abstract; claims 1-9; figure 1; examples 1,2 *<br>* paragraphs [0116] - [0123] * | 3 | ADD. H01M4/139<br>H01M4/02 |
| X | US 11 658 283 B2 (MURATA MANUFACTURING CO [JP]) 23 May 2023 (2023-05-23) | 5 | |
| Y<br>A | * abstract; claims 1-10; example sample 9; tables 2,3 *<br>* columns 12-14 *<br>* columns 18-19 * | 3<br>1,2,4 | |

**TECHNICAL FIELDS SEARCHED (IPC)**

H01M

The present search report has been drawn up for all claims

| Place of search | Date of completion of the search | Examiner |
|---|---|---|
| The Hague | 8 April 2025 | Ramos Alonso, A |

EPO FORM 1503 03.82 (P04C01)

## ANNEX TO THE EUROPEAN SEARCH REPORT
## ON EUROPEAN PATENT APPLICATION NO.

EP 24 21 2941

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2025

| Patent document cited in search report | | Publication date | Patent family member(s) | | Publication date |
|---|---|---|---|---|---|
| JP 5316862 | B2 | 16-10-2013 | JP | 5316862 B2 | 16-10-2013 |
| | | | JP | 2010182479 A | 19-08-2010 |
| CN 115939311 | A | 07-04-2023 | CN | 115939311 A | 07-04-2023 |
| | | | WO | 2024140164 A1 | 04-07-2024 |
| US 11658283 | B2 | 23-05-2023 | CN | 110495035 A | 22-11-2019 |
| | | | JP | 6804052 B2 | 23-12-2020 |
| | | | JP | WO2018179894 A1 | 08-08-2019 |
| | | | US | 2019393481 A1 | 26-12-2019 |
| | | | WO | 2018179894 A1 | 04-10-2018 |

EPO FORM P0459

For more details about this annex : see Official Journal of the European Patent Office, No. 12/82

**EP 4 571 868 A1**

## REFERENCES CITED IN THE DESCRIPTION

**Patent documents cited in the description**

- JP 2018174096 A
- JP 2022100812 A